# EUROPÄISCHE PATENTSCHRIFT

(11) **EP 1 061 238 B1**
(45) Veröffentlichungstag und Bekanntmachung des Hinweises auf die Patenterteilung: **27.11.2002**
(21) Anmeldenummer: 00110794.5
(22) Anmeldetag: 20.05.2000
(51) Int. Cl.: F01L 9/04

(54) **Verfahren zur Überwachung des Betriebs einer Kolbenbrennkraftmaschine mit vollvariable Gaswechselventilen**
Method for monitoring the operation of a piston engine with totally variable gas exchange valves
Méthode de surveillance de l'opération d'un moteur à pistons avec des soupapes d'échange de gaz variables

(30) Priorität: 17.06.1999 DE 19927669
(43) Veröffentlichungstag der Anmeldung: 20.12.2000
(73) Patentinhaber: FEV Motorentechnik GmbH, 52078 Aachen (DE)
(72) Erfinder: van der Staay, Frank, 52146 Würselen (DE); Kather, Lutz, 52146 Würselen (DE)
(74) Vertreter: Langmaack, Jürgen, Dipl.-Ing.

(56) Entgegenhaltungen:
- DE-A- 3 611 220
- DE-A- 19 733 138
- DE-A- 19 733 142
- US-A- 5 816 218

## Beschreibung

Bei Kolbenbrennkraftmaschinen mit vollvariabel angesteuerten Gaswechselventilen werden die Ventiltriebe durch elektromagnetische Aktuatoren gebildet, die im wesentlichen bestehen aus zwei Elektromagneten, die mit Abstand zueinander angeordnet sind und zwischen denen ein Anker hin und her bewegbar geführt ist, der mit dem betreffenden Gaswechselventil verbunden ist. Die Elektromagneten werden in ihrer Bestromung durch eine Motorsteuerung gesteuert. Für den Betrieb der Aktuatoren ist es ferner wichtig, die Auftreffgeschwindigkeit des Ankers auf der Polfläche des zugehörigen Elektromagneten bei Erreichen der jeweiligen Schaltstellung zu minimieren, wobei ein sicherer Betrieb bei gleichzeitiger Minimierung der elektrischen Leistungsaufnahme von Bedeutung ist. Die Aktuatoren sind daher nicht ohne eine integrierte Sensorik zu betreiben, um hier den Anforderungen an den Betrieb der Kolbenbrennkraftmaschine zu genügen. Das Vorhandensein derartiger Sensoren führt allerdings zu möglichen Fehlfunktionen, die zu überwachen sind. Von Bedeutung ist hierbei der Ausfall eines Sensors bei noch betriebsfähigem Aktuator. Der Ausfall eines Sensors an einem Aktuator führte bisher dazu, daß von der Motorsteuerung der betreffende Aktuator als "nicht funktionsfähig" erkannt wird und dann entsprechend der zugehörige Zylinder vollständig stillgesetzt wird, d. h. Kraftstoffzufuhr und Zündung abgeschaltet werden und je nach Fall auch die Aktuatoren aller Gaswechselventile dieses Zylinders stillgesetzt werden. Über entsprechende Steuerprogramme der Motorsteuerung wird dann ggf. der Lastanteil des ausgefallenen stillgesetzten Zylinders auf die anderen befeuerten Zylinder verteilt.

Gemäß der Erfindung werden diese Probleme behoben durch ein Verfahren zur Überwachung des Betriebs einer Kolbenbrennkraftmaschine mit über eine Motorsteuerung in ihrer Bestromung nach jeweils vorgebbaren Stromverläufen voll variabel ansteuerbaren elektromagnetischen Aktuator für die Gaswechselventile, die jeweils mit einem Sensor zur Funktionserfassung in Verbindung stehen, durch die an die Motorsteuerung betriebsrelevante Signale über den Bewegungsablauf des betreffenden Aktuators abgegeben werden, wobei von der Motorsteuerung jeweils für den Aktuator der Verlauf von Strom und Spannung erfaßt wird und bei Ausfall eines Sensorsignals über den Spannungsverlauf am Aktuator ein Sensorausfall oder ein Ausfall des Aktuators erfaßt wird und bei Ausfall eines Sensors an einem Aktuator jeweils die Funktionserfassung eines Sensors an einem anderen korrespondierenden Aktuators von der Motorsteuerung übernommen wird, die dann für den zunächst als nicht funktionsfähig festgestellten Aktuator auf Startbetrieb (Anschwingen) umschaltet und erst bei Erfassung eines Ausfalls dieses Aktuators der zugehörige Zylinder stillgesetzt wird.

Mit dieser Maßnahme ist es möglich, bei Ausfall eines Sensors aber noch funktionsfähigem Aktuator, die Kolbenbrennkraftmaschine im normalen Arbeitsablauf aller Zylinder weiterzubetreiben, und den ausgefallene Sensor durch einen funktionsfähigen Sensor an einem anderen korrespondierenden Aktuator zu ersetzen. Falls jedoch aus der Erfassung von Strom und Spannung im Rahmen des Bewegungsvorganges sich ergeben sollte, daß überhaupt keine Ankerbewegung erfolgt, dann muß auf einen Schaden am Aktuator geschlossen werden und entsprechend der Zylinder abgeschaltet werden. Das bedeutet, daß Kraftstoffzufuhr und Zündung abgeschaltet werden und je nach Gestaltung des Programms und der Zahl der vorgesehenen Gaswechselventile dieser Zylinder "leer" mitläuft, wobei die verbleibenden Gaswechselventile im normalen Arbeitszyklus angesteuert werden. Hierbei kann es zweckmäßig sein, wenn bereits in der Prüfphase beim Übergang zum Startbetrieb zumindest die Kraftstoffzufuhr zu dem betreffenden Zylindern abgeschaltet und erst bei Eingang des Signals "Aktuator funktionsfähig" wieder zugeschaltet wird. Hierdurch wird vermieden, daß während dieser Zwischenphase unverbrannter Kraftstoff in den Abgastrakt gelangt und die Abgasnachbehandlungseinrichtung mit unverbrannten Kohlenwasserstoffen belastet wird.

In Ausgestaltung des erfindungsgemäßen Verfahrens ist vorgesehen, daß für den Start- und/oder Normalbetrieb der aktuelle Stromverlauf des mit dem Aktuator mit Sensordefekt korrespondierenden Aktuators in der Motorsteuerung abgespeichert und um Sicherheitszuschläge in bezug auf den zeitlichen Verlauf und/oder die Stromhöhe erweitert wird und daß der Aktuator mit Sensordefekt nach dem erweiterten Stromverlauf angesteuert wird. Damit ist hier die Möglichkeit gegeben, daß bei einem Sensorausfall, im übrigen aber funktionsfähigem Aktuator etwaige äußere Einflüsse, wie beispielsweise ein Streuband aufgrund von Verbrennungsstochastik, Streuungen in der Aktuatorcharakteristik oder auch einen etwaigen Aktuatorverschleiß zu berücksichtigen. Die Erweiterung des Stromverlaufs kann insbesondere in einer Erhöhung des Fangstromniveaus und/oder in einer Vorverlegung der Fangstromeinschaltzeit erfolgen, um so über einen derartigen Sicherheitszuschlag ein erfolgreiches Starten sicherzustellen.

In Ausgestaltung der Erfindung ist vorgesehen, daß als korrespondierender Aktuator von der Motorsteuerung die Funktion eines Aktuators erfaßt wird, der nach dem Steuerprogramm unter gleichen Betriebsbedingungen wie der zu startende Aktuator betrieben wird. Für einen Aktuator mit Sensordefekt an einem Gaseinlaßventil bedeutet das, daß als korrespondierender Aktuator der Aktuator eines anderen Gaseinlaßventils berücksichtigt wird. Ebenso gilt dies für die Gasauslaßventile. Bei einer Kolbenbrennkraftmaschine, deren Zylinder jeweils wenigstens zwei Gaseinlaßventile aufweisen und/oder wenigstens zwei Gasauslaßventile aufweisen, wird zweckmäßigerweise der abzuspeichernde aktuelle Stromverlauf vom korrespondierenden Aktuator am gleichen Zylinder erfaßt. Bei Kolbenbrennkraftmaschinen, bei denen beispielweise zwei Einlaßventile aber nur ein Auslaßventil vorhanden ist oder bei Kolbenbrennkraftmaschinen mit jeweils nur einem Einlaß- und einem Auslaßventil je Zylinder, wird für den Aktuator mit Sensordefekt an diesem einen Ventil der abzuspeichernde Stromverlauf von einem korrespondierenden Aktuator an einem anderen Zylinder abgegriffen.

In erfindungsgemäßer Ausgestaltung des Verfahrens ist ferner vorgesehen, daß zur Berücksichtigung der Motordynamik der aktuelle Stromverlauf eines korrespondierenden Aktuators an einem Zylinder gewählt wird, der in der Zündreihenfolge unmittelbar vor dem Zylinder mit dem Aktuator mit Sensordefekt liegt. Dadurch ist es möglich, daß ohne nennenswerte Beeinträchtigung des Motorbetriebes die Ansteuerung des Aktuators mit ausgefallenem Sensor über den Sensor des korrespondierenden Aktuators übernommen wird.

In Ausgestaltung des erfindungsgemäßen Verfahrens ist ferner vorgesehen, daß bei einem Aktuator mit Sensordefekt zur Betätigung eines Auslaßventils als Sicherheitszuschlag für den zu erweiternden Stromverlauf nur eine Verschiebung der Öffnungszeit in Richtung auf "spätes Auslaßöffnen" vorgenommen wird. Hierbei wird dieser Aktuator von dem mit der Steuerung vorgesehenen normalen Stromverlauf hinsichtlich Fangstromhöhe und auch Fangstromeinschaltzeit betrieben und nur mit einer etwas späteren Steuerzeit für das Auslaßöffnen angesteuert, da sich dann im zugehörigen Zylinder das Druckniveau bereits reduziert und so der Betrieb sicherer ist.

Die Erfindung wird anhand schematischer Zeichnungen näher erläutert. Es zeigen:
- Fig. 1: ein Schaltschema für einen über eine Motorsteurung ansteuerbaren elektromagnetischen Aktuator zur Betätigung eines Gaswechselventils,
- Fig. 2: eine 4-Zylinder-Kolbenbrennkraftmaschien mit jeweils vier Gaswechselventilen je Zylinder,
- Fig. 3: einen Stromverlauf für die Beaufschlagung eines Elektromagneten an einem Aktuator,
- Fig. 4: einen Verlauf des Öffnungsweges eines Gasauslaßventils in Abhängigkeit von der Zeit und korrespondierend zum Druckabbau im Zylinder,
- Fig. 5: ein Flußdiagramm des Überwachungsverfahrens in der Motorsteuerung für einen Sensor-/Aktuatorausfall,
- Fig. 6: ein präzisiertes Flußdiagramm für den Teilbereich A in Fig. 5,
- Fig. 7: ein Flußdiagramm für einen anderen Verfahrensablauf des Teilbereichs A in Fig. 5,
- Fig. 8: ein weiteres Teilflußdiagramm für den Bereich A in Fig. 5 für ein weiteres abgewandeltes Verfahren.

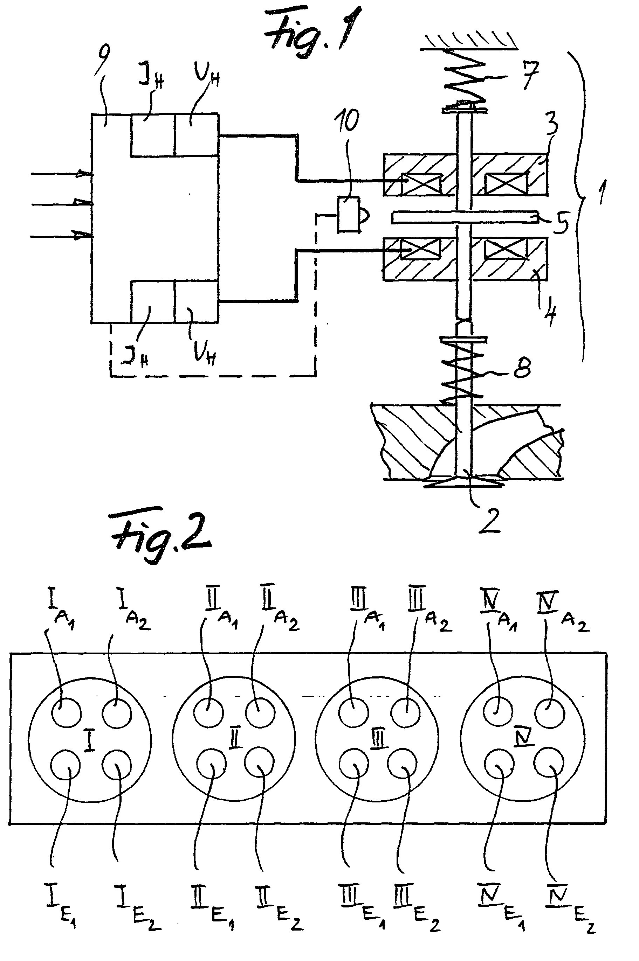

In Fig. 1 ist schematisch ein elektromagnetischer Aktuator 1 zur Betätigung eines Gaswechselventils 2 dargestellt. Der Aktuator 1 besteht im wesentlichen aus einem Schließmagneten 3 und einem Öffnermagneten 4, die im Abstand zueinander angeordnet sind und zwischen denen ein Anker 5 gegen die Kraft von Rückstellfedern, nämlich einer Öffnerfeder 7 und einer Schließfeder 8 hin und her bewegbar geführt ist.

Die Elektromagneten 3 und 4 des Aktuators 1 werden über eine elektronische Motorsteuerung 9 entsprechend den vorgegebenen Steuerprogrammen und in Abhängigkeit von den der Motorsteuerung zugeführten Betriebsdaten, wie Drehzahl, Temperatur etc. angesteuert.

Dem Aktuator 1 ist ein Sensor 10 zugeordnet, der die Erfassung der Aktuatorfunktion ermöglicht. Der Sensor 10 ist hier schematisch dargestellt. Je nach der Auslegung des Sensors 10 kann beispielsweise der Weg des Ankers 5 erfaßt werden, so daß die jeweilige Ankerposition der Motorsteuerung 9 übermittelt werden kann. In der Motorsteuerung 9 kann dann über entsprechende Rechenoperationen die Ankergeschwindigkeit ermittelt werden, so daß sowohl in Abhängigkeit von der Ankerposition als auch in Abhängigkeit von der Ankergeschwindigkeit die Bestromung der beiden Elektromagneten 3, 4 gesteuert werden kann.

Der Sensor 10 muß nicht zwangsläufig, wie dargestellt, dem Anker seitlich zugeordnet sein, sondern es ist auch möglich, entsprechende Sensoren im Bereich der Polfläche der jeweiligen Elektromagneten anzuordnen oder aber auch einer mit dem Anker 5 in Verbindung stehenden Führungsstange 11 zuzuordnen.

Die Motorsteuerung 9 weist ferner entsprechende Mittel zur Erfassung des Stroms und der Spannung für den jeweiligen Elektromagneten 3 und 4 sowie zur Veränderung des Stromverlaufs und des Spannungsverlaufs auf. Über die Motorsteuerung 9 kann dann in Abhängigkeit von vorgebbaren Betriebsprogrammen, ggf. gestützt auf entsprechende Kennfelder, der Aktuator 1 des Gaswechselventils 2 vollvariabel angesteuert werden, so beispielsweise hinsichtlich der Beginns und des Endes der Öffnungszeiten und hinsichtlich der Höhe des Öffnungshubes oder auch der Zahl der Öffnungshübe während einer Öffnungszeit oder dergl..

In Fig. 2 ist schematisch eine 4-Zylinder-Kolbenbrennkraftmaschine dargestellt, die je Zylinder I, II, III, IV mit jeweils zwei Einlaßventilen I_{E1}, I_{E2}, II_{E1}, II_{E2}, III_{E1}, III_{E2}, IV_{E1}, IV_{E2} sowie zwei Auslaßventilen I_{A1}, I_{A2}, II_{A1}, II_{A2}, III_{A1}, III_{A2}, IV_{A1}, IV_{A2} versehen ist. Erhält nun die Motorsteuerung 9 während des Betriebes von einem Sensor 10, beispielsweise des Gaseinlaßventiles I_{E1} kein Signal, dann wird im nächsten Betätigungstakt beim Abschalten des Haltestroms der Verlauf der Haltespannung überprüft. Hat der Anker an der Polfläche des betreffenden Elektromagneten angelegen, an dem der Haltestrom abgeschaltet wurde, dann ergibt sich ein charakteristischer Abfall der Haltespannung. Ist dieser charakteristische Abfall der Haltespannung gegeben, dann hat der Anker angelegen und es kann daraus geschlossen werden, daß nur der Sensor defekt ist. In diesem Fall kann dann entsprechend dem erfindungsgemäßen Verfahren dieser Aktuator ohne Rücksicht auf entsprechende Signale des fehlerhaften Sensors weiterbetrieben werden.

Es ist aber auch möglich, wie nachstehend noch näher beschrieben werden wird, im Rahmen der Motorsteuerung auf den Sensor des korrespondierenden Gaseinlaßventils I_{E2} umzuschalten, so daß zur Berücksichtigung der Motordynamik über den Sensor des Gaseinlaßventils I_{E2} der Stromverlauf für den Aktuator des Gaseinlaßventils I_{E1} zu steuern. Wird der für ein Lösen eines Ankers von der Polfläche charakteristische Spannungsabfall der Haltespannung für den Aktuator I_{E1} nicht festgestellt, ergibt sich wiederum die Möglichkeit, daß entweder der betreffende Aktuator defekt ist oder durch äußere Einflüsse in der Mittellage "hängen" geblieben ist. In diesem Fall wird von der Motorsteuerung 9 für den Aktuator des Gaseinlaßventils I_{E1} auf Startbetrieb umgeschaltet, d. h. die beiden Elektromagneten 3, 4 werden in dem für den Start vorgesehenen Programm von der Motorsteuerung durch abwechselnde Beaufschlagung mit Strom angeschwungen, bis sie zur Anlage kommen, wobei das Anschwingen so erfolgt, daß die Anlage an der Polfläche durch eine entsprechende Ansteuerung des Startprogramm zu einem Zeitpunkt erfolgt, in dem sie auch im normalen Betrieb erfolgen müßte, so daß dann, Funktionsfähigkeit des Aktuators vorausgesetzt, dieses Gaswechselventil im Normalverfahren weiterbetrieben werden könnte. Wird hierbei gleichzeitig auch wieder ein Signal des Sensors 10 festgestellt, dann hat lediglich eine betriebliche Störung vorgelegen, d. h. der Aktuator und auch der Sensor sind funktionsfähig, so daß im Normalbetrieb weitergefahren werden kann.

Wird zwar kein Sensorsignal festgestellt, jedoch über den Spannungsverlauf an den jeweils bestromten Elektromagneten des Aktuators ein ordnungsgemäßer Spannungs- und Stromverlauf festgestellt, dann ist der Sensor defekt, so daß, wie vorstehend beschrieben, die Ansteuerung ohne Rücksicht auf einen Sensor oder aber durch Übernahme der Funktionsdaten des Sensors an einem korrespondierenden Aktuator erfolgt.

Sollte jedoch keines der Signale festgestellt werden, dann liegt ein Defekt an dem betreffenden Aktuator vor, so daß dieser Aktuator stillgesetzt wird oder, falls während der Anschwingoperation, Kraftstoffzufuhr und Zündung abgeschaltet wurde, die Kraftstoffzufuhr und Zündung abgeschaltet bleibt. In diesem Falle kann von der Motorsteuerung die Last des ausgefallenen Zylinders auf die übrigen Zylinder anteilig verteilt werden.

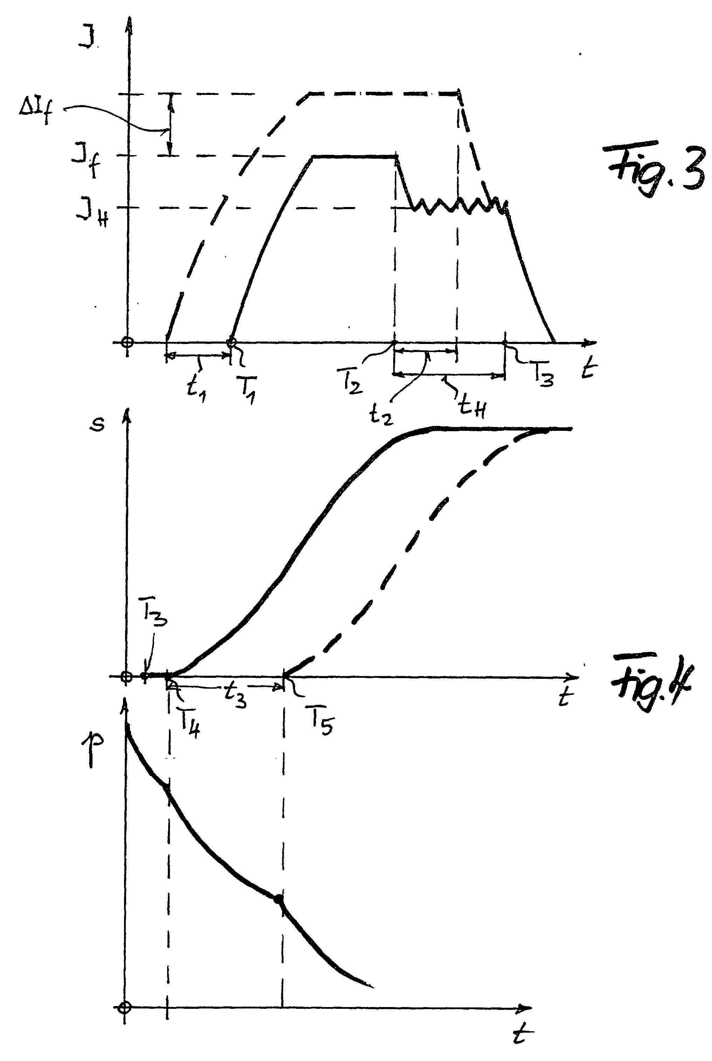

In Fig. 3 ist der von der Motorsteuerung gesteuerte Stromverlauf an einem Elektromagneten dargestellt. Zum Zeitpunkt T₁ wird bei Annäherung des Ankers 5 an einen fangenden Elektromagneten, beispielsweise bei Durchgang durch die Mittellage, der Fangstrom eingeschaltet und über eine vorgebbare Zeit in einer vorgegebenen Stromhöhe I_{f} gehalten, so daß sichergestellt ist, daß der Anker auch an der Polfläche zur Anlage gekommen ist. Danach wird zum Zeitpunkt T₂ die Stromhöhe abgesenkt auf den Haltestrom I_{H}, wobei während dieser Zeitzeit t_{H} der Strom in seiner Höhe getaktet wird. Jeweils zum vorgesehenen Öffnungs- bzw. Schließzeitpunkt des Gaswechselventils wird dann zum Zeitpunkt T₃ der Strom abgeschaltet, so daß nach Abbau des Magnetfeldes unter der Kraftwirkung der zugehörigen Rückstellfeder der Anker 5 zusammen mit dem Gaswechselventil in die andere Schaltposition bewegt wird. Bei diesem Ablösevorgang ergibt sich ein charakteristischer Verlauf der Haltspannung, da durch die Restmagnetisierung des sich vom haltenden Elektromagneten lösenden Ankers eine Spannung induziert wird, die in der Motorsteuerung 9 in Größe und zeitlichem Verlauf erfaßt werden kann.

Ist nun ein Sensorsignal ausgeblieben und wird von der Motorsteuerung das Anschwingen versucht, so wird entsprechend der Erfindung für das Anschwingen und insbesondere für den anschließenden weiteren Betrieb ein vorgegebener Stromverlauf entsprechend Fig. 3 von einem korrespondierenden Aktuator übernommen, beispielsweise, wie vorstehend anhand von Fig. 2 beschrieben, der Stromverlauf des korrespondierenden Einlaßventils I_{E2}. Um hier einen ordnungsgemäßen Verlauf sicherzustellen, wird der Aktuator des neu anzusteuernden Einlaßventils I_{E1} mit einem Stromverlauf angesteuert, der sowohl hinsichtlich des Einschaltzeitpunktes um einen Zeitraum t₁ gegenüber T₁ vorverlegt ist, und der auch hinsichtlich der Fangstromhöhe um das Maß ΔIF höher ausgelegt ist. Auch gegenüber dem Zeitpunkt des Zurückschaltens auf den Haltestrom I_{H} wird als Sicherheitszuschlag dieser Zeitpunkt um den Zeitraum t₂ später geschaltet. Diese Maßnahmen sind in Fig. 3 dargestellt.

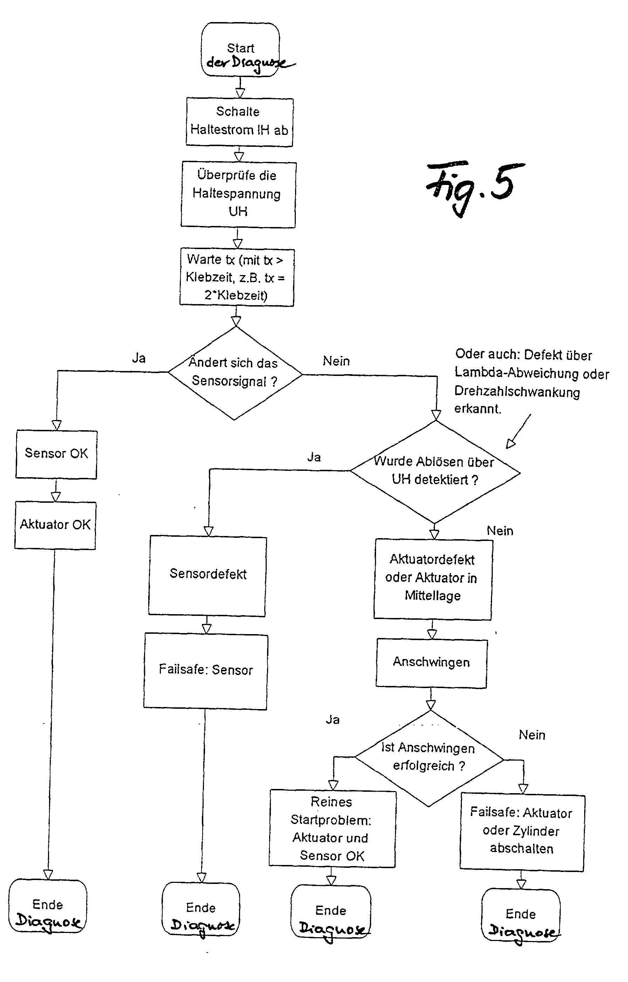

Für die Gasauslaßventile ergibt sich infolge des Gasgegendruckes noch eine Besonderheit. In Fig. 4 ist der Verlauf das Ankerweges s in Abhängigkeit von der Zeit wiedergegeben. Wird, wie in Fig. 3 dargestellt, zum Zeitpunkt T₃ an einem Aktuator für ein Gasauslaßventil der Haltestrom abgeschaltet, dann löst sich nach einer gewissen Klebzeit zum Zeitpunkt T₄ der Anker von der Polfläche, so daß das Gaswechselventil aus der Stellung "geschlossen" bis in die Stellung "offen" bewegt worden ist und an der Polfläche des Elektromagneten 4 zur Anlage gekommen ist.

Ist bei einer Ausgestaltung der Motorsteuerung zur Anwendung des erfindungsgemäßen Verfahrens der Ausfall eines Sensorsignals festgestellt worden, jedoch gleichzeitig festgestellt worden, daß der Anker in seiner Schließstellung am Schließmagneten 3 anliegt, dann wird über die Motorsteuerung der tatsächliche Öffnungszeitpunkt T₄ um einen vorgebbaren Zeitraum T₃ in Richtung auf "spätes Auslaßöffnen" verschoben, so daß tatsächlich erst zum Zeitpunkt T₅ der Bewegungsbeginn erfolgen kann.

Vergleicht man den Verlauf des Weges des Auslaßventils in Abhängigkeit von der Zeit zum Verlauf des Zylinderdruckes ebenfalls in Abhängigkeit von der Zeit, dann ergibt sich, daß zum Zeitpunkt T₄ vom Aktuator noch ein hoher Gegendruck für den Öffnungsvorgang zu überwinden ist.

Verschiebt man jedoch den Öffnungszeitpunkt um das Maß t₃, dann ist im Zylinder bereits ein deutlicher Druckabbau erfolgt, so daß ein wesentlich geringerer Gegendruck beim Öffnungsvorgang zu überwinden ist.

Das vorstehende Beispiel wurde für den Betriebsfall erläutert, daß bei einer Kolbenbrennkraftmaschine entsprechend Fig. 2 mit jeweils zwei Einlaßventilen und zwei Auslaßventilen eine Störung am Einlaßventil I_{E1} festgestellt wurde. Das "Umschalten" auf die Sensorik eines korrespondierenden Aktuators erfolgt dann immer so, daß auf einen Aktuator gleicher Funktionsweise umgeschaltet wird, d. h. bei Ausfall eines Aktuators für ein Einlaßventil entsprechend auf einen anderen Aktuator für ein Einlaßventil und in gleicher Weise auch bei den Auslaßventilen.

Bei der Ausführungsform gem. Fig. 2 ist es immer am günstigsten, als korrespondierenden Aktuator den noch verbleibenden Aktuator am gleichen Zylinder auf die Motorsteuerung aufzuschalten.

Bei Kolbenbrennkraftmaschinen mit beispielsweise nur einem Auslaßventil muß bei Ausfall des Aktuators an einem Auslaßventil eines Zylinders auf einen korrespondierenden, d. h. einen Aktuator eines Auslaßventils an einem anderen Zylinder umgeschaltet werden. Hierbei ist es dann zweckmäßig, wenn diese Umschaltung auf einen Aktuator erfolgt, der einem Zylinder zugeordnet ist, der in der Zündreihenfolge unmittelbar vor dem Zylinder mit dem zu startenden Aktuator liegt.

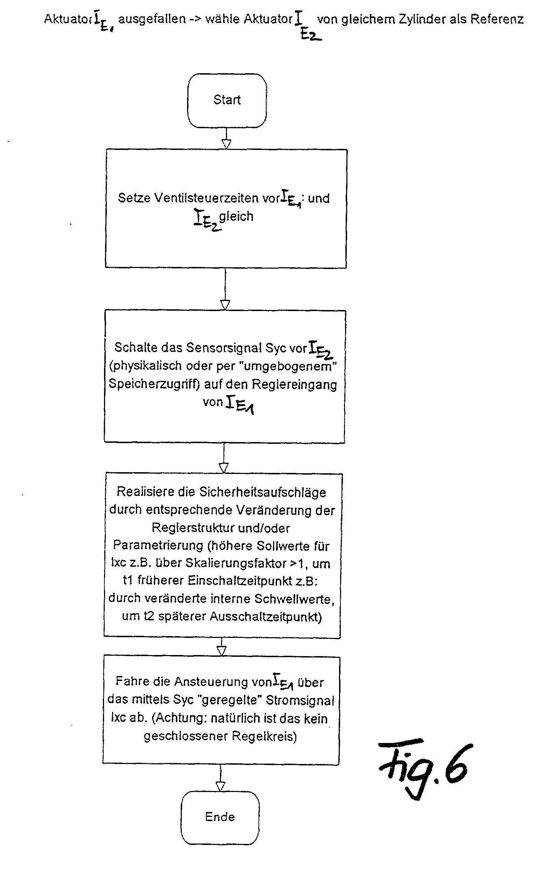

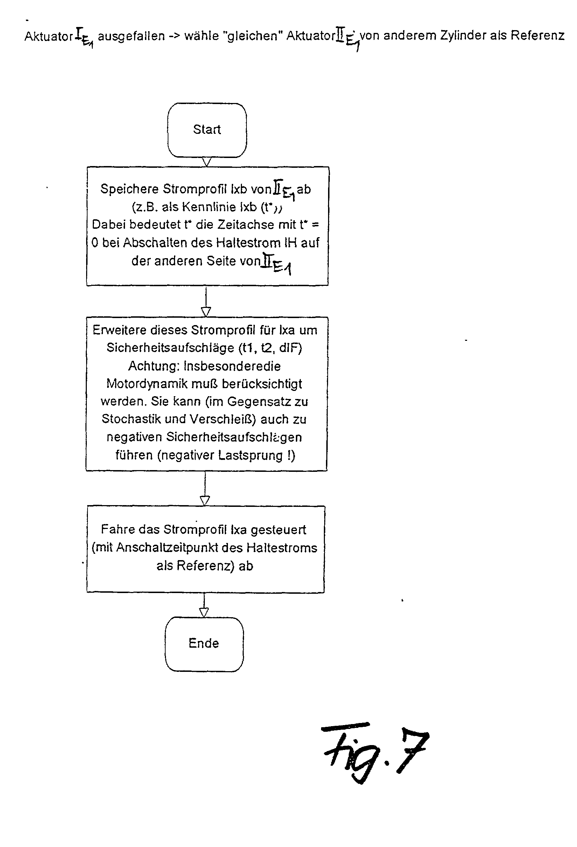

In Fig. 5 ist in einem Flußdiagramm der Steuerungsablauf in der Motorsteuerung des vorbeschriebenen Verfahrens dargestellt. In Fig. 6, 7 und 8 sind dann jeweils die für die unterschiedlichen Schaltmöglichkeiten erforderlichen Maßnahmen für den Bereich A in Fig. 5 wiedergegeben.

Fig. 6 zeigt den vorstehend beschriebenen Fall des Ausfalls des Aktuators am Einlaßventil I_{E1} und die dazu erforderliche Umsteuerung auf das Einlaßventil I_{E2} am gleichen Zylinder.

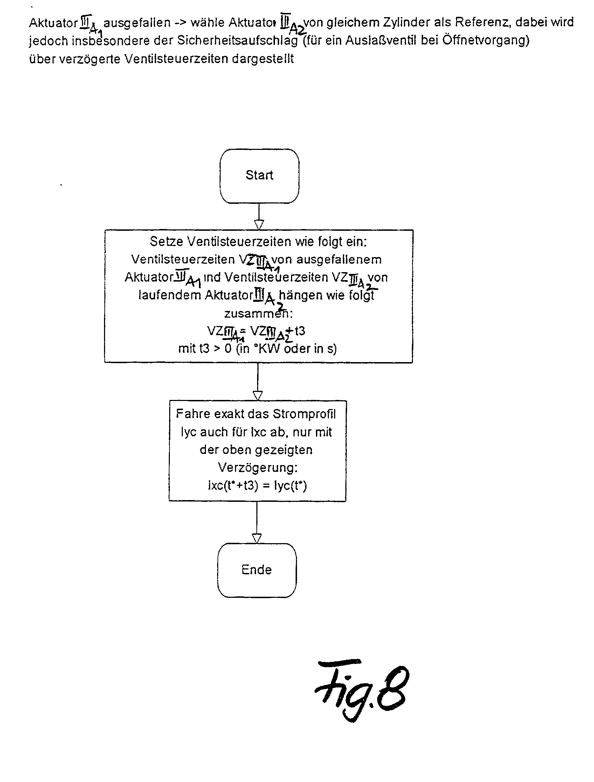

Fig. 7 zeigt diesen Ablauf für den Fall, daß nur ein Einlaßventil je Zylinder vorhanden ist, die Umschaltung vom zu startenden Einlaßventil I_{E1} auf das korrespondierende Einlaßventil II_{E2} an einem anderen Zylinder.

Fig. 8 zeigt für den Fall einer Kolbenbrennkraftmaschine entsprechend Fig. 2 bei einem Ausfall des Gasauslaßventils I_{A1} die Umschaltung auf den Sensor des korrespondierenden Aktuators des Auslaßventils I_{A2} am gleichen Zylinder und zwar für den Fall des Öffnungshubes. Dieser Vorgang ist anhand von Fig. 4 erläutert. Für den Schließhub wird der anhand von Fig. 3 in Verbindung mit Fig. 6 beschriebene Verfahrensablauf durchgeführt, so daß in bezug auf die Gasauslaßventile wegen der besonderen Betriebsverhältnisse für den Schließvorgang und für den Öffnungsvorgang jeweils unterschiedliche Verfahrensabläufe vorgesehen werden.

## Patentansprüche

1. Verfahren zur Überwachung des Betriebs einer Kolbenbrennkraftmaschine mit über eine Motorsteuerung in ihrer Bestromung nach jeweils vorgebbaren Stromverläufen vollvariabel ansteuerbaren elektromagnetischen Aktuatoren (1) für die Gaswechselventile (2), die jeweils mit einem Sensor (10) zur Funktionserfassung in Verbindung stehen, durch die an die Motorsteuerung (9) betriebsrelevante Signale über den Bewegungsablauf des betreffenden Aktuators (1) abgegeben werden, wobei von der Motorsteuerung (9) jeweils für den Aktuator (1) der Verlauf von Strom und Spannung erfaßt werden und bei Ausfall eines Sensorsignals über den Spannungsverlauf am Aktuator (1) ein Sensorausfall oder ein Aktuatorausfall erfaßt wird und bei Ausfall eines Sensors (10) an einem Aktuator (9) jeweils die Funktionserfassung eines Sensors an einem anderen korrespondierenden Aktuator von der Motorsteuerung (9) übernommen wird, die für den zunächst als nicht funktionsfähig festgestellten Aktuator (1) auf Startbetrieb, insbesondere durch Anschwingen, geschaltet wird und bei Erfassung eines Ausfalls des Aktuators (1) der zugehörige Zylinder stillgesetzt wird.

2. Verfahren nach Anspruch 1, **dadurch gekennzeichnet, daß** bei einem Signal "Nichtfunktion" eines Aktuators (1) zumindest die Kraftstoffzufuhr zu dem zugeordneten Zylinder abgeschaltet und erst wieder bei Eingang des Signals "Funktion" zugeschaltet wird.

3. Verfahren nach Anspruch 1 oder 2, **dadurch gekennzeichnet, daß** für die Einleitung des Startbetriebs der aktuelle Stromverlauf des mit dem zu startenden Aktuator (1) korrespondierende Aktuators in der Steuerung abgespeichert und um Sicherheitszuschläge in bezug auf den zeitlichen Verlauf und/oder die Stromhöhe erweitert wird und daß der zu startende Aktuator (1) nach dem erweiterten Stromverlauf angesteuert wird.

4. Verfahren nach einem der Ansprüche 1 bis 3, **dadurch gekennzeichnet, daß** als korrespondierender Aktuator von der Motorsteuerung (9) die Funktion eines Aktuators erfaßt wird, der nach dem Steuerprogramm unter gleichen Betriebsbedingungen wie der zu startende Aktuator (1) betrieben wird.

5. Verfahren nach einem der Ansprüche 1 bis 4, **dadurch gekennzeichnet, daß** der abzuspeichernde aktuelle Stromverlauf von einem Aktuator am gleichen Zylinder abgegriffen wird.

6. Verfahren nach einem der Ansprüche 1 bis 4, **dadurch gekennzeichnet, daß** der abzuspeichernde aktuelle Stromverlauf von einem Aktuator an einem anderen Zylinder abgegriffen wird.

7. Verfahren nach einem der Ansprüche 1 bis 6, **dadurch gekennzeichnet, daß** zur Berücksichtigung der Motordynamik der aktuelle Stromverlauf eines Aktuators an einem Zylinder gewählt wird, der in der Zündreihenfolge unmittelbar vor dem Zylinder mit dem zu startenden Aktuator (1) liegt.

8. Verfahren nach einem der Ansprüche 1 bis 7, **dadurch gekennzeichnet, daß** bei einem zu startenden Aktuator (1) zur Betätigung eines Auslaßventils (2) als Sicherheitszuschlag für den zu erweiternden Stromverlauf nur einer Verschiebung des Öffnungszeitpunktes in Richtung auf "spätes Auslaßöffnen" vorgenommen wird.

## Claims

1. A method for monitoring the operation of a internal combustion piston engine with electromagnetic actuators (1) for the gas exchange valves (2) the current supply of which actuators can be triggered in fully variable manner via an engine control means according to current paths which can be preset in each case, which actuators are each connected to a sensor (10) for detecting operation, by means of which signals relevant to operation are transmitted to the engine control means (9) via the sequence of motions of the relevant actuator (1), wherein in each case for the actuator (1) the current path and voltage curve are detected by the engine control means (9) and if a sensor signal fails a sensor failure or an actuator failure is detected via the voltage curve at the actuator (1) and if a sensor (10) fails at an actuator (9) in each case the detection of operation of a sensor at another corresponding actuator is taken over by the engine control means (9) which is switched to start operation, in particular by oscillation build-up, for the actuator (1) which is initially established as not being operational, and when a failure of the actuator (1) is detected the associated cylinder is shut down.

2. A method according to Claim 1, **characterised in that** if an actuator (1) signals "non-operation" at least the supply of fuel to the associated cylinder is switched off and is not switched on again until the "operation" signal is received.

3. A method according to Claim 1 or 2, **characterised in that** for the initiation of start operation the current current path of the actuator corresponding to the actuator (1) to be started is stored in the control means and is extended by safety increments relative to the progress over time and/or the current amplitude and that the actuator (1) to be started is triggered after the extended current path.

4. A method according to one of Claims 1 to 3, **characterised in that** as corresponding actuator the engine control means (9) detects the operation of an actuator which is operated according to the control program under the same operating conditions as the actuator (1) to be started.

5. A method according to one of Claims 1 to 4, **characterised in that** the current current path to be stored is read off by an actuator on the same cylinder.

6. A method according to one of Claims 1 to 4, **characterised in that** the current current path to be stored is read off by an actuator on another cylinder.

7. A method according to one of Claims 1 to 6, **characterised in that** in order to make allowance for the engine dynamics the current current path of an actuator is selected on a cylinder which lies immediately before the cylinder with the actuator (1) which is to be started in the ignition sequence.

8. A method according to one of Claims 1 to 7, **characterised in that** in the case of an actuator (1) to be started for actuating an outlet valve (2) only a shift of the time of opening towards "delayed outlet opening" is effected as a safety increment for the current path which is to be extended.

## Revendications

1. Procédé de surveillance de l'opération d'un moteur à pistons, comprenant des actionneurs électromagnétiques (1) destinés aux soupapes d'échange de gaz (2), dont l'alimentation en courant peut être commandée de manière entièrement variable à l'aide d'une commande de moteur selon des courbes de courant respectives prédéterminées, et qui sont reliés respectivement à un capteur de détection de fonctionnement respectifs (10), par lesquels sont émis vers la commande de moteur (9) des signaux pertinents pour l'opération au sujet du mouvement de l'actionneur (1) concerné, la commande de moteur (9) détectant pour chaque actionneur (1) la courbe de courant et de tension respective et détectant, en cas d'absence d'un signal de capteur, une panne de capteur ou une panne d'actionneur à l'aide de la courbe de tension au niveau de l'actionneur (1) et, en cas de panne d'un capteur (10) au niveau d'un actionneur (1), la détection du fonctionnement d'un capteur au niveau d'un autre actionneur correspondant étant à chaque fois entreprise par la commande de moteur (9), laquelle est commutée en mode démarrage, notamment par amorçage d'oscillations, pour l'actionneur dont le mauvais fonctionnement a d'abord été constaté et immobilise le cylindre correspondant lorsqu'une panne de l'actionneur (1) est constatée.

2. Procédé selon la revendication 1, **caractérisé en ce que** lors d'un signal de « non fonctionnement » d'un actionneur (1), au moins l'alimentation en carburant vers le cylindre associé est interrompue et n'est remise en marche qu'à la réception du signal « fonctionnement ».

3. Procédé selon la revendication 1 ou 2, **caractérisé en ce que** pour engager le mode démarrage, la courbe de courant actuelle de l'actionneur correspondant à l'actionneur (1) devant être démarré est mémorisée dans la commande et complétée par des marges de sécurité concernant le déroulement dans le temps et/ou l'intensité du courant, et **en ce que** l'actionneur (1) devant être démarré est commandé selon la courbe de courant complétée.

4. Procédé selon l'une des revendications 1 à 3, **caractérisé en ce que**, en tant qu'actionneur correspondant, la commande de moteur (9) détecte le fonctionnement d'un actionneur qui est opéré selon le programme de commande sous les mêmes conditions d'opération que l'actionneur (1) devant être démarré.

5. Procédé selon l'une des revendications 1 à 4, **caractérisé en ce que** la courbe de courant actuelle devant être mémorisée est saisie par un actionneur situé sur le même cylindre.

6. Procédé selon l'une des revendications 1 à 4, **caractérisé en ce que** la courbe de courant actuelle devant être mémorisée est saisie par un actionneur situé sur un autre cylindre.

7. Procédé selon l'une des revendications 1 à 6, **caractérisé en ce que** pour tenir compte de la dynamique de moteur, on choisit la courbe de courant actuelle d'un actionneur au niveau d'un cylindre qui, dans la séquence d'allumage, est disposé directement avant le cylindre avec l'actionneur (1) devant être démarré.

8. Procédé selon l'une des revendications 1 à 7, **caractérisé en ce que**, dans le cas d'un actionneur (1) devant être démarré pour actionner une soupape d'échappement (2), on ne procède qu'à un décalage de l'instant d'ouverture dans le sens « ouverture d'échappement retardée » comme marge de sécurité pour la courbe de courant devant être élargie.
